# EUROPEAN PATENT APPLICATION

(11) **EP 4 742 509 A1**
(43) Date of publication of application: **13.05.2026**
(21) Application number: 25208802.6
(22) Date of filing: 15.10.2025
(51) Int. Cl.: H02K 7/00, H02K 7/08, H02K 7/116

(54) **ACTUATOR AND ACTUATOR UNIT**

(30) Priority: 06.11.2024 JP 2024194489
(71) Applicant: Sumitomo Heavy Industries, Ltd., Tokyo 141-6025 (JP)
(72) Inventor: FUKASAWA, Toshiki, Kanagawa, 237-8555, (JP)
(74) Representative: Louis Pöhlau Lohrentz

(57) **Abstract**

Provided is an actuator (10) that enables identification of the state of rotation of an output shaft (44) and that is advantageous for size reduction of a speed reducer (20) and a motor (18).

The actuator (10) includes a motor (18) that includes a motor shaft (16), a speed reducer (20) that is able to output rotation, of which a speed has been reduced to be lower than a speed of rotation of the motor shaft (16), to a driven member (12) via an output shaft (44), a counter-load side rotating body (22) that is disposed on a counter-load side with respect to the motor shaft (16) and that is provided to be relatively rotatable with respect to the motor shaft (16), and a rotation detector (26) for detection of rotation of the counter-load side rotating body (22), in which each of the output shaft (44) and the counter-load side rotating body (22) is couplable to the driven member (12) disposed outside the actuator (10).

## Description

### BACKGROUND OF THE INVENTION

### Field of the Invention

The present disclosure relates to an actuator.

### Description of Related Art

Disclosed in Japanese Unexamined Patent Publication No. 2022-142033 is an actuator that includes a motor including a motor shaft and a speed reducer disposed on a load side with respect to the motor. The speed reducer includes an output shaft that can output, to a driven member, rotation of which the speed has been reduced to be lower than the speed of rotation of the motor shaft. The actuator in Japanese Unexamined Patent Publication No. 2022-142033 includes, to identify the state of rotation of the output shaft, a detection shaft that penetrates the speed reducer and the motor and that is integrally rotatable with the output shaft and a rotation detector that detects rotation of the detection shaft.

### SUMMARY OF THE INVENTION

The present inventor has recognized that there is room for improvement regarding the technology disclosed in Japanese Unexamined Patent Publication No. 2022-142033 in achieving an advantage for size reduction of the speed reducer and the motor while enabling identification of the state of rotation of the output shaft.

An object of the present disclosure is to provide an actuator that enables identification of the state of rotation of the output shaft and that is advantageous for size reduction of a speed reducer and a motor.

According to an aspect of the present disclosure, there is provided an actuator including a motor that includes a motor shaft, a speed reducer that is able to output rotation, of which a speed has been reduced to be lower than a speed of rotation of the motor shaft, to a driven member via an output shaft, a counter-load side rotating body that is disposed on a counter-load side with respect to the motor shaft and that is provided to be relatively rotatable with respect to the motor shaft, and a rotation detector for detection of rotation of the counter-load side rotating body, in which each of the output shaft and the counter-load side rotating body is couplable to the driven member disposed outside the actuator.

According to the aspect of the present disclosure, it is possible to enable identification of the state of rotation of an output shaft and to achieve an advantage for size reduction of a speed reducer and a motor.

### BRIEF DESCRIPTION OF THE DRAWINGS

FIG. 1 is a perspective view showing an actuator unit according to an embodiment.
FIG. 2 is a side sectional view showing the actuator unit according to the embodiment.
FIG. 3 is an enlarged view of a part of FIG. 1.

### DETAILED DESCRIPTION OF THE INVENTION

Hereinafter, an embodiment of an actuator of the present disclosure will be described. The same or equivalent elements will be denoted by the same reference symbols and the repeated description thereof will be omitted. In each drawing, for convenience of description, components are omitted, enlarged, or reduced as appropriate. The drawings are to be viewed in directions along reference symbols. In the present specification, the expressions "first" and "second" are used only as formal descriptions for distinguishing between a plurality of elements and do not have any other substantial meaning. For example, there may be a "second" element without a "first" element.

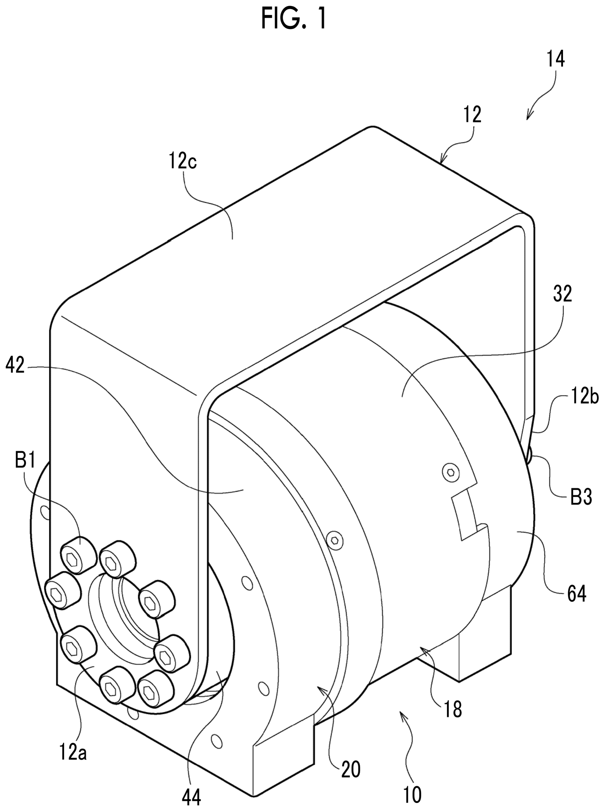

The description will be made with reference to FIG. 1. An actuator 10 is incorporated into a parent machine. The actuator 10 can drive a driven element of a parent machine by outputting rotation. The parent machine is, for example, (1) a robot such as an industrial robot and a service robot, (2) an industrial machine such as a machine tool and a construction machine, (3) a transportation machine such as a conveyor, or (4) one of various machines such as a vehicle. Here, an example in which the parent machine is a robot and the actuator 10 is incorporated into a joint portion of the parent machine will be described. The actuator 10 is an integral actuator in which a motor casing 32 and a speed reducer casing 42 (which will be described below) are integrated with each other.

The actuator 10 is used in combination with a driven member 12 which is a part of the parent machine. The actuator 10 and the driven member 12 constitute an actuator unit 14. The driven member 12 is coupled to an output shaft 44 of a speed reducer 20 (which will be described later), and can transmit rotation output from the output shaft 44 to a driven element of the parent machine.

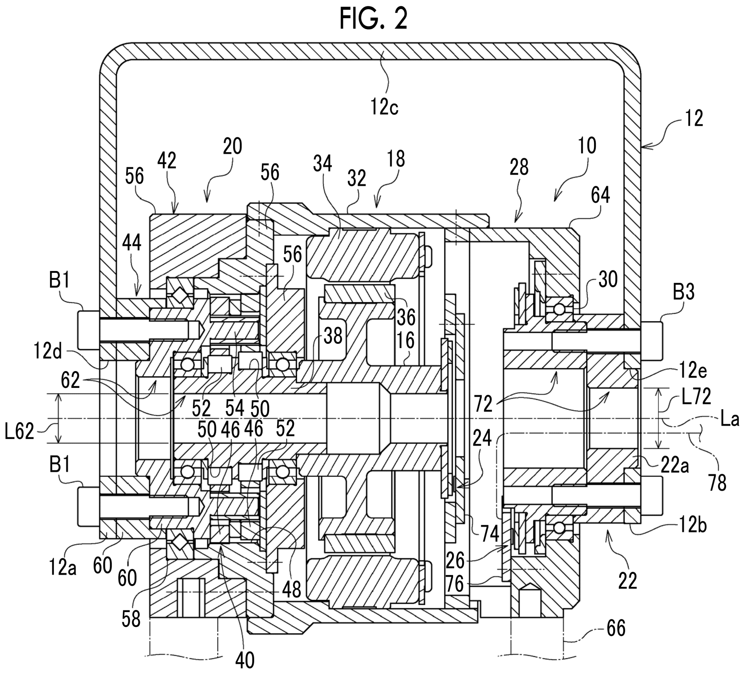

The description will be made with reference to FIG. 2. In the drawing, only an axis passing through a shaft portion will be represented by a one-dot chain line regarding a part of coupling tools such as a bolt. The actuator 10 includes a motor 18 including a motor shaft 16, a speed reducer 20 disposed on a load side with respect to the motor 18, a counter-load side rotating body 22 disposed on a counter-load side with respect to the motor shaft 16, a first rotation detector 24 for detection of rotation of the motor shaft 16, and a second rotation detector 26 for detection of rotation of the counter-load side rotating body 22. In addition, the actuator 10 includes a casing body 28 including the motor casing 32 of the motor 18, and a counter-load side bearing 30 that supports the counter-load side rotating body 22 to be rotatable with respect to the casing body 28.

In the present specification, a direction along a rotation center line La of the motor shaft 16 will be simply referred to as an axial direction, and a radius direction and a circumferential direction of a circle around the rotation center line La will be simply referred to as a radial direction and a circumferential direction. In addition, a side (the left side of a paper surface of FIG. 2) toward the speed reducer 20 from the motor 18 in the axial direction will be referred to as the load side, and a side opposite thereto (the right side of the paper surface of FIG. 2) in the axial direction will be referred to as the counter-load side.

The motor 18 includes the motor casing 32, a stator 34 fixed to the motor casing 32, and a rotor 36 provided to be integrally rotatable with the motor shaft 16. The motor casing 32 accommodates the motor shaft 16, the stator 34, and the rotor 36. The type of the rotor 36 is not particularly limited, and the rotor 36 may be, for example, a permanent magnet type rotor, a cage type rotor, a winding type rotor, a coreless type rotor, and the like. The type of the stator 34 is not particularly limited, and the stator 34 may be, for example, a permanent magnet type stator, a winding type stator, a coreless type stator, and the like.

The speed reducer 20 can output rotation, of which the speed has been reduced to be lower than the speed of rotation of the motor shaft 16, to the driven member 12 via an output shaft 44. The speed reducer 20 includes an input shaft 38 to which rotation transmitted from the motor shaft 16 is to be input, a reduction mechanism 40 that can reduce the speed of rotation of the input shaft 38, the speed reducer casing 42 that accommodates at least a part of the reduction mechanism 40, and the output shaft 44 that is disposed on the load side with respect to the reduction mechanism 40. The reduction mechanism 40 according to the present embodiment includes external gears 46 and an internal gear 48 that mesh with each other. The reduction mechanism 40 of the present embodiment is an eccentric oscillating reduction mechanism that can oscillate the external gears 46 by means of eccentric bodies 50 provided at the input shaft 38 such that the external gears 46 are rotated and the axial rotation component thereof is transmitted to the output shaft 44.

The input shaft 38 of the present embodiment is provided to be integrally rotatable with the motor shaft 16. The input shaft 38 may be provided separately from the motor shaft 16 as in the present embodiment, or may be integrally provided with the motor shaft 16 by using the same member as the motor shaft 16.

The external gears 46 are provided to correspond to the eccentric bodies 50, and each external gear 46 is supported via an eccentric bearing 52 by the eccentric body 50 corresponding thereto. The internal gear 48 is provided at an inner peripheral portion of the speed reducer casing 42. Pins 54 that penetrate the external gears 46 protrude from the output shaft 44 and the axial rotation component of the external gears 46 is transmitted to the output shaft 44 by the pins 54.

The speed reducer casing 42 is disposed on the load side with respect to the motor casing 32. The speed reducer casing 42 accommodates the input shaft 38, the output shaft 44, and the like in addition to at least a part (here, the external gears 46) of the reduction mechanism 40. The speed reducer casing 42 of the present embodiment is composed of a plurality (three in the present embodiment) of speed reducer casing members 56 coupled to each other by a coupling tool such as a bolt. A main bearing 58 that supports the output shaft 44 is disposed between the speed reducer casing 42 and the output shaft 44. The output shaft 44 of the present embodiment is composed of a plurality of output shaft members 60 coupled to each other by coupling tools B1 such as bolts.

The actuator 10 may include a load side hollow portion 62 that penetrates the speed reducer 20 and the motor shaft 16 in the axial direction. The load side hollow portion 62 of the present embodiment penetrates, in addition to the motor shaft 16, the output shaft 44 of the speed reducer 20 and the input shaft 38 of the speed reducer 20 which is integrated with the motor shaft 16.

The casing body 28 of the present embodiment includes, in addition to the motor casing 32, the speed reducer casing 42 and a counter-load side casing 64 disposed on the counter-load side with respect to the motor casing 32. The casing body 28 is coupled to a support member 66 disposed outside the actuator 10 and is supported by the support member 66.

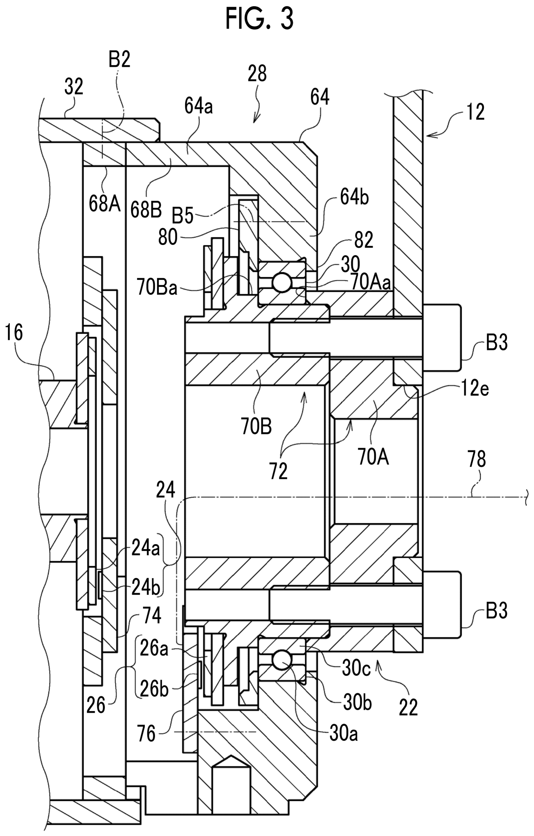

The description will be made with reference to FIG. 3. The counter-load side casing 64 is coupled to the motor casing 32 by a coupling tool B2 such as a bolt. The counter-load side casing 64 includes an outer peripheral wall portion 64a and an end wall portion 64b that protrudes radially inward from a counter-load side end portion of the outer peripheral wall portion 64a.

The counter-load side casing 64 of the present embodiment is composed of a plurality of counter-load side casing members 68A and 68B. The plurality of counter-load side casing members 68A and 68B include a first counter-load side casing member 68A disposed inside the motor casing 32 and a second counter-load side casing member 68B provided on the counter-load side with respect to the first counter-load side casing member 68A. The first counter-load side casing member 68A is coupled to the motor casing 32 by the coupling tool B2, and the second counter-load side casing member 68B is coupled to the first counter-load side casing member 68A by a coupling tool (not shown) such as a bolt.

The counter-load side rotating body 22 is provided to be relatively rotatable with respect to the motor shaft 16. The respective rotation center lines of the counter-load side rotating body 22 and the output shaft 44 are provided coaxially. The counter-load side rotating body 22 of the present embodiment includes a first rotation member 70A and a second rotation member 70B that is coupled to the first rotation member 70A by coupling tools B3 such as bolts. The coupling tools B3 fasten the driven member 12 with the first rotation member 70A and the second rotation member 70B. The first rotation member 70A is disposed on the counter-load side, and the second rotation member 70B is disposed closer to the load side than the first rotation member 70A is. Each of the rotation members 70A and 70B has a shape obtained by dividing the counter-load side rotating body 22 in the axial direction.

The counter-load side rotating body 22 may include a counter-load side hollow portion 72 that penetrates the counter-load side rotating body 22 in the axial direction. The counter-load side hollow portion 72 of the present embodiment is formed inside each of the rotation members 70A and 70B. In the present embodiment, the inner diameters of the rotation members 70A and 70B are different from each other in the counter-load side hollow portion 72. The size relationship between the inner diameters is not particularly limited and the inner diameters may be equal to each other.

The counter-load side bearing 30 includes a plurality of rolling elements 30a and includes an outer ring 30b and an inner ring 30c on which the plurality of rolling elements 30a roll. The counter-load side bearing 30 of the present embodiment is a ball bearing. However, the type thereof is not particularly limited and the counter-load side bearing 30 may be a roller bearing or the like. The outer ring 30b is disposed at an inner peripheral portion of the casing body 28, and the inner ring 30c is disposed at an outer peripheral portion of the counter-load side rotating body 22. The counter-load side bearing 30 is disposed between the casing body 28 and the counter-load side rotating body 22. The counter-load side bearing 30 of the present embodiment is disposed between the counter-load side casing 64 and the counter-load side rotating body 22, and supports the counter-load side rotating body 22 to be rotatable with respect to the counter-load side casing 64.

The first rotation detector 24 of the present embodiment is a rotary encoder. However, the specific example thereof is not particularly limited and the first rotation detector 24 may be a resolver, a potentiometer, or the like. The first rotation detector 24 includes a first detection target portion 24a provided at the motor shaft 16 and a first detection unit 24b provided at the casing body 28. For example, the first detection target portion 24a is a ring member such as a code wheel or a magnetic ring, and the first detection unit 24b is a sensor such as an optical sensor or a magnetic sensor. The first detection unit 24b of the present embodiment is provided at the casing body 28 via a first circuit board 74 attached to the casing body 28. When the first detection target portion 24a is rotated together with the motor shaft 16, the first detection unit 24b detects the rotation of the motor shaft 16 by detecting a change in predetermined physical quantity (magnetic field, light amount, or the like) caused by the rotation of the first detection target portion 24a. The first detection unit 24b cooperates with the first detection target portion 24a to detect the rotation of the motor shaft 16. The expression "detection of the rotation" herein means detection of information related to rotation of a target referred to. The information related to the rotation is, for example, the position of rotation or the rotation rate of the target referred to.

The second rotation detector 26 of the present embodiment is a rotary encoder. However, the specific example thereof is not particularly limited and the second rotation detector 26 may be a resolver, a potentiometer, or the like. The second rotation detector 26 includes a second detection target portion 26a provided at the counter-load side rotating body 22 and a second detection unit 26b provided at the casing body 28. For example, the second detection target portion 26a is a ring member such as a code wheel or a magnetic ring, and the second detection unit 26b is a sensor such as an optical sensor or a magnetic sensor. The second detection unit 26b of the present embodiment is provided at the casing body 28 via a second circuit board 76 attached to the casing body 28. When the second detection target portion 26a is rotated together with the counter-load side rotating body 22, the second detection unit 26b detects the rotation of the counter-load side rotating body 22 by detecting a change in predetermined physical quantity (magnetic field, light amount, or the like) caused by the rotation of the second detection target portion 26a. The second detection unit 26b cooperates with the second detection target portion 26a to detect the rotation of the counter-load side rotating body 22.

The first detection unit 24b outputs, to a motor driver (not shown), a detection signal indicating the detected rotation of the motor shaft 16. The second detection unit 26b outputs, to the motor driver, a detection signal indicating the detected rotation of the counter-load side rotating body 22. The motor driver controls the operation of the motor 18 based on the detection signals output from the first detection unit 24b and the second detection unit 26b. The motor driver may be disposed outside the actuator 10 or may be mounted on any of the first and second circuit boards 74 and 76.

The description will be made with reference to FIGS. 1 and 2. The driven member 12 is disposed outside the actuator 10. The driven member 12 does not penetrate the inside of the motor 18 and the inside of the speed reducer 20 in the axial direction. It can be said that the driven member 12 does not penetrate the inside of the load side hollow portion 62 that penetrates the motor 18 and the speed reducer 20 in the axial direction.

The driven member 12 includes a first coupling portion 12a that is coupled to the output shaft 44 by means of the coupling tools B1 such as bolts, a second coupling portion 12b that is coupled to the counter-load side rotating body 22 by means of the coupling tools B3 such as bolts, and a connection portion 12c that connects the first coupling portion 12a and the second coupling portion 12b to each other. Each of the output shaft 44 and the counter-load side rotating body 22 can be coupled to the driven member 12. The driven member 12 of the present embodiment has a U-shape as a whole because of the first coupling portion 12a, the second coupling portion 12b, and the connection portion 12c. A driven element (not shown) is coupled to the driven member 12.

In the present embodiment, the first coupling portion 12a is disposed on the load side with respect to the output shaft 44, and the second coupling portion 12b is disposed on the counter-load side with respect to the counter-load side rotating body 22. The coupling tools B1 and B3 used for coupling of the coupling portions 12a and 12b are disposed at an interval in the circumferential direction around the rotation center line La of the motor shaft 16. In the present embodiment, the coupling tools B1 used for coupling of the first coupling portion 12a fasten the plurality of output shaft members 60 in addition to the first coupling portion 12a.

The first coupling portion 12a includes a first through-hole 12d penetrating the first coupling portion 12a in the axial direction. The first through-hole 12d is provided to surround the rotation center line La of the motor shaft 16. When a wiring member is to be inserted into the load side hollow portion 62, the wiring member can pass through the first through-hole 12d.

The second coupling portion 12b includes a second through-hole 12e penetrating the second coupling portion 12b in the axial direction. A protrusion 22a that is provided on the counter-load side rotating body 22 and that protrudes to the counter-load side may be fitted to the second through-hole 12e. The second through-hole 12e is provided to surround the rotation center line La of the motor shaft 16. To satisfy such a condition, a section of the second through-hole 12e of the present embodiment that is perpendicular to the axial direction has a closed shape. However, the section of the second through-hole 12e may have an open shape open in a direction perpendicular to the axial direction.

When a wiring member 78 is to be inserted into the counter-load side hollow portion 72, the wiring member 78 can pass through the second through-hole 12e. Here, only the center line of the wiring member 78 is represented by a one-dot chain line. Although an example in which the wiring member 78 of the present embodiment is connected to the second circuit board 76 has been described, the wiring member 78 may be connected to the first circuit board 74 or may be inserted into the load side hollow portion 62 or the like without being connected to the first circuit board 74 and the second circuit board 76. For example, the wiring member 78 may be a transmission path for an electric signal transmitted between circuit components mounted on the first and second circuit boards 74 and 76 and an external electric device. The circuit components are, for example, sensors that constitute the detection units 24b and 26b described above. In addition, the wiring member 78 may be a transmission path for an electric signal transmitted between a plurality of external electric devices.

The connection portion 12c is disposed outside the actuator 10 while being disposed at a position at which the connection portion 12c overlaps with the actuator 10 in the radial direction. The connection portion 12c may be provided in, for example, a circumferential area that is half or less of the entire circumferential area around the rotation center line La of the motor shaft 16 and may be provided in a circumferential area that is 1/4 or less of the entire circumferential area around the rotation center line La of the motor shaft 16.

A minimum inner diameter L72 of the counter-load side hollow portion 72 may be larger than a minimum inner diameter L62 of the load side hollow portion 62. The minimum inner diameter L72 of the counter-load side hollow portion 72 means the minimum value of the inner diameter of the counter-load side hollow portion 72. The minimum inner diameter L62 of the load side hollow portion 62 means the minimum value of the inner diameter of the load side hollow portion 62.

The effects of the above-described actuator 10 will be described.

Each of the output shaft 44 and the counter-load side rotating body 22 can be coupled to the driven member 12 disposed outside the actuator 10. Since the output shaft 44 and the counter-load side rotating body 22 are coupled to the driven member 12, the counter-load side rotating body 22 can be rotated at the same rotation speed as the output shaft 44. It is possible to identify the state of rotation of the output shaft 44 by detecting rotation of the counter-load side rotating body 22 with the second rotation detector 26. For example, it is possible to identify the position of rotation, the rotation rate, and the like of the output shaft 44 rotated at the same speed as the counter-load side rotating body 22 by detecting the position of rotation, the rotation rate, and the like of the counter-load side rotating body 22 with the second rotation detector 26.

In addition, at the time identification of the state of rotation of the output shaft 44 is to be enabled as described above, it is sufficient to couple each of the output shaft 44 and the counter-load side rotating body 22 to the driven member 12 disposed outside the actuator 10. Therefore, at the time identification of the state of rotation of the output shaft 44 is to be enabled as described above, it is not necessary to provide a detection shaft that penetrates the speed reducer 20 and the motor 18 and that is integrally rotatable with the output shaft 44. Accordingly, a disposition space for the detection shaft does not need to be secured in the speed reducer 20 and the motor 18, which is advantageous for size reduction of the speed reducer 20 and the motor 18. Achieving an advantage for size reduction of the speed reducer 20 and the motor 18 is also advantageous in selecting the speed reducer 20 and the motor 18 having suitable sizes from existing products.

Particularly, the detection shaft does not need to be provided in the load side hollow portion 62 that penetrates the input shaft 38 of the speed reducer 20 and the motor shaft 16, which is advantageous in securing a large internal space in the load side hollow portion 62. In addition, a fact that it is not necessary to secure a large internal space in the load side hollow portion 62 is advantageous for size reduction of the input shaft 38 and the motor shaft 16 and is advantageous for size reduction of the first rotation detector 24 of which a part is provided at the motor shaft 16. In addition, a wiring member can be directly inserted into the load side hollow portion 62 that penetrates the input shaft 38 and the motor shaft 16. Therefore, there is also an advantage that a decrease in inner diameter of a hollow portion into which a wiring member is directly inserted can be avoided in comparison with a case where the detection shaft is provided with the hollow portion for the wiring member.

For example, a case where the components of the second rotation detector 26 are disposed outside the actuator 10 will be considered. In this case, since the functions of the second rotation detector 26 are not fully realized by the actuator alone, there is a problem in which the convenience of the user using the actuator 10 provided by a provider (for example, a manufacturer) of the actuator 10 is impaired. For example, it is necessary to design a parent machine dedicated to the second rotation detector 26, which is inconvenient for a designer of the parent machine into which the actuator is to be incorporated. In addition, incorporating the components of the second rotation detector 26 separately from the actuator 10 when incorporating the actuator 10 into the parent machine takes labor, which is inconvenient for a worker assembling the parent machine.

In this regard, according to the present embodiment, the actuator 10 itself includes the second rotation detector 26, and the functions of the second rotation detector 26 are fully realized by the actuator alone. Therefore, the convenience of a user using the actuator is excellent. For example, it is not necessary to design a parent machine dedicated to the second rotation detector 26, which is convenient for a designer of the parent machine. In addition, it is not necessary to incorporate the components of the second rotation detector 26 with labor when incorporating the actuator 10 into the parent machine, which is convenient for a worker assembling the parent machine.

A fact that the functions of the second rotation detector 26 are fully realized by the actuator 10 alone means that it is not necessary to provide the components of the second rotation detector 26 at a part of the parent machine separately from the actuator 10. The components of the second rotation detector 26 here mean the second detection target portion 26a and the second detection unit 26b of the second rotation detector 26. Since the second detection target portion 26a is provided at the counter-load side rotating body 22 and the second detection unit 26b is provided at the casing body 28, the functions of the second rotation detector 26 are fully realized by the actuator 10 alone, which can be regarded as being excellent in convenience of a user.

Since the speed reducer 20 is not present in the vicinity of the counter-load side rotating body 22 and nearly all of the components of the motor 18 (the stator 34, the rotor 36, the motor shaft 16, and the like) are not also present in the vicinity of the counter-load side rotating body 22, design restrictions are less likely to be caused by those components. Therefore, an advantage for an increase in inner diameter of the counter-load side hollow portion 72 of the counter-load side rotating body 22 is achieved. In addition, an increase in inner diameter of the counter-load side hollow portion 72 of the counter-load side rotating body 22 is advantageous in directly inserting the wiring member 78. In addition, even in a case where the inner diameter of the load side hollow portion 62 penetrating the speed reducer 20 and the motor shaft 16 is small or in a case where the load side hollow portion 62 is not present, the counter-load side hollow portion 72 of the counter-load side rotating body 22 can be effectively used as a path for the wiring member 78. From such a viewpoint, the minimum inner diameter L72 of the counter-load side hollow portion 72 may be larger than the minimum inner diameter L62 of the load side hollow portion 62.

The second coupling portion 12b of the driven member 12 includes the second through-hole 12e. Therefore, when inserting the wiring member 78 into the counter-load side hollow portion 72 of the counter-load side rotating body 22, it is possible to avoid interference between the wiring member 78 and the driven member 12 by disposing the wiring member 78 to pass through the inside of the second through-hole 12e. In addition, positions at which the coupling tools B3 are disposed can be secured around the second through-hole 12e, which is advantageous in increasing the number of the coupling tools B3.

Next, other features of the actuator 10 will be described. The description will be made with reference to FIG. 3. The second rotation detector 26 may be accommodated in the casing body 28. The second rotation detector 26 of the present embodiment is accommodated in the counter-load side casing 64 of the casing body 28. The second rotation detector 26 of the present embodiment is accommodated at a position that is closer to the load side than the end wall portion 64b of the counter-load side casing 64 is and that is surrounded by the outer peripheral wall portion 64a. The second rotation detector 26 of the present embodiment is accommodated inside the casing body 28 on the counter-load side of the motor shaft 16 and the first rotation detector 24. Since the second rotation detector 26 is accommodated in the casing body 28, the influence of an external environment such as water, oil, and dust on the second rotation detector 26 can be suppressed, which is advantageous in maintaining the functions of the second rotation detector 26.

The outer ring 30b of the counter-load side bearing 30 of the present embodiment is disposed at an inner peripheral portion of the end wall portion 64b of the counter-load side casing 64. The actuator 10 includes a positioning member 80 that is coupled to the casing body 28 by a coupling tool B5 such as a bolt. The positioning member 80 of the present embodiment is disposed on the load side with respect to the end wall portion 64b of the counter-load side casing 64.

The outer ring 30b may be positioned in the axial direction by the casing body 28 and the positioning member 80. In order to realize this, the casing body 28 includes an outer ring movement restricting portion 82 that restricts axial movement of the outer ring 30b by coming into contact with the outer ring 30b from a side opposite to the positioning member 80 in the axial direction. The outer ring movement restricting portion 82 of the present embodiment is composed of a step portion provided at the end wall portion 64b of the counter-load side casing 64. The outer ring 30b is relatively positioned with respect to the casing body 28 in the axial direction since the axial movement thereof is restricted by the outer ring movement restricting portion 82 of the casing body 28 and the positioning member 80. Accordingly, the outer ring 30b can be reliably positioned by the positioning member 80 coupled to the casing body 28 in comparison with a case where the outer ring 30b is positioned by a stop ring.

The inner ring 30c of the counter-load side bearing 30 may be positioned in the axial direction by the first rotation member 70A and the second rotation member 70B. In order to realize this, the first rotation member 70A includes a first movement restricting portion 70Aa that restricts axial movement of the inner ring 30c to the counter-load side by coming into contact with the inner ring 30c from the counter-load side. The first movement restricting portion 70Aa of the present embodiment is disposed on an outer peripheral side of the second rotation member 70B, and is composed of a spigot fitting portion spigot-fitted to the second rotation member 70B. The second rotation member 70B includes a second movement restricting portion 70Ba that restricts axial movement of the inner ring 30c to the load side by coming into contact with the inner ring 30c from the load side. The second movement restricting portion 70Ba of the present embodiment is composed of a step portion provided at an outer peripheral portion of the second rotation member 70B. Specific examples of the first movement restricting portion 70Aa and the second movement restricting portion 70Ba are not particularly limited. For example, the first movement restricting portion 70Aa may be a step portion provided at an outer peripheral portion of the first rotation member 70A, and the second movement restricting portion 70Ba may be a spigot fitting portion that is disposed on an outer peripheral side of the first rotation member 70A and that is spigot-fitted to the first rotation member 70A.

The axial movement of the inner ring 30c is restricted by the first movement restricting portion 70Aa of the first rotation member 70A and the second movement restricting portion 70Ba of the second rotation member 70B so that the inner ring 30c is relatively positioned with respect to the counter-load side rotating body 22 in the axial direction. Accordingly, the inner ring 30c can be more reliably positioned by the first rotation member 70A and the second rotation member 70B which are coupled to each other in comparison with a case where the inner ring 30c is positioned by means of a stop ring.

Next, modified embodiments of each component described so far will be described.

Specific examples of the reduction mechanism 40 of the speed reducer 20 are not particularly limited. Instead of an eccentric oscillating reduction mechanism, the reduction mechanism 40 may be a gear mechanism such as a simple planetary gear reduction mechanism, a flexible meshing type reduction mechanism (including a tubular type, a silk hat type, and a cup type), a perpendicular shaft gear reduction mechanism, and a parallel shaft gear reduction mechanism. The reduction mechanism 40 may be a friction transmission mechanism instead of the gear mechanism. Although a center crank type in which the input shaft 38 is disposed on the rotation center line La has been described as an example of the eccentric oscillating reduction mechanism, a distribution type in which the input shaft 38 is disposed at a position radially offset from the rotation center line La may also be adopted.

The casing body 28 may not include the counter-load side casing 64. In this case, the counter-load side rotating body 22 may be supported by the counter-load side bearing 30 to be rotatable with respect to the motor casing 32. The second rotation detector 26 may be disposed outside the casing body 28.

The counter-load side rotating body 22 may be composed of a single member without the first and second rotation members 70A and 70B. The counter-load side rotating body 22 may not include the counter-load side hollow portion 72.

The outer ring 30b of the counter-load side bearing 30 may be positioned in the axial direction by a stop ring or the like attached to the casing body 28. The inner ring 30c of the counter-load side bearing 30 may be positioned in the axial direction by a stop ring or the like attached to the counter-load side rotating body 22.

The actuator 10 may not include the load side hollow portion 62 that penetrates the speed reducer 20 and the motor shaft 16. The minimum inner diameter L72 of the counter-load side hollow portion 72 may be equal to or smaller than the minimum inner diameter L62 of the load side hollow portion 62.

The contents of each component described in the above-described embodiment and the like are merely examples. The technical idea abstracted from these contents should not be construed to be limited to the contents of the present specification. Regarding the contents of each component described in the embodiment and the like, various design changes such as change, addition, and deletion can be made. Contents capable of being subject to such a design change are emphasized by assigning notation "present embodiment" and notation "embodiment". However, design changes are allowed even for a content without such notation. Any combination of the above-described components is also acceptable. For example, any description item of the modified embodiments may be combined with the embodiment. Hatching in the sections of the drawings is not intended to limit the material of a hatched object. It is a matter of course that structures and numerical values as mentioned in the embodiment and the modified embodiments include those that can be regarded as being the same when manufacturing errors and the like are taken into consideration. A component composed of a single member in the description in the present specification may be composed of a plurality of members. Similarly, a component composed of a plurality of members may be composed of a single member.

### Brief Description of the Reference Symbols

- 10:: actuator
- 12:: driven member
- 12a:: coupling portion
- 14:: actuator unit
- 16:: motor shaft
- 18:: motor
- 20:: speed reducer
- 22:: counter-load side rotating body
- 26:: rotation detector (second rotation detector)
- 26a:: detection target portion (second detection target portion)
- 26b:: detection unit (second detection unit)
- 28:: casing body
- 30:: counter-load side bearing
- 30b:: outer ring
- 30c:: inner ring
- 32:: motor casing
- 44:: output shaft
- 62:: load side hollow portion
- 64:: counter-load side casing
- 70A:: first rotation member
- 70B:: second rotation member
- 72:: counter-load side hollow portion
- 80:: positioning member

## Claims

1. An actuator (10) comprising:
a motor (18) that includes a motor shaft (16);
a speed reducer (20) that is able to output rotation, of which a speed has been reduced to be lower than a speed of rotation of the motor shaft (16), to a driven member (12) via an output shaft (44);
a counter-load side rotating body (22) that is disposed on a counter-load side with respect to the motor shaft (16) and that is provided to be relatively rotatable with respect to the motor shaft (16); and
a rotation detector (26) for detection of rotation of the counter-load side rotating body (22),
wherein each of the output shaft (44) and the counter-load side rotating body (22) is couplable to the driven member (12) disposed outside the actuator (10).

2. The actuator (10) according to claim 1, further comprising:
a casing body (28) that includes a motor casing (32) of the motor (18); and
a counter-load side bearing (30) that supports the counter-load side rotating body (22) to be rotatable with respect to the casing body (28).

3. The actuator (10) according to claim 2,
wherein the rotation detector (26) is accommodated in the casing body (28).

4. The actuator (10) according to claim 2,
wherein the rotation detector (26) includes a detection target portion (26a) that is provided at the counter-load side rotating body (22) and a detection unit (26b) that is provided at the casing body (28) and that detects rotation of the counter-load side rotating body (22) in cooperation with the detection target portion (26a).

5. The actuator (10) according to claim 2, further comprising:
a positioning member (80) that is coupled to the casing body (28) by a coupling tool (B5),
wherein an outer ring (30b) of the counter-load side bearing (30) is positioned in an axial direction by the positioning member (80) and the casing body (28).

6. The actuator (10) according to claim 2,
wherein the counter-load side rotating body (22) includes a first rotation member (70A) and a second rotation member (70B) that is coupled to the first rotation member (70A) by a coupling tool (B3), and
an inner ring (30c) of the counter-load side bearing (30) is positioned in an axial direction by the first rotation member (70A) and the second rotation member (70B).

7. The actuator (10) according to claim 2,
wherein the casing body (28) includes a counter-load side casing (64) that is disposed on the counter-load side with respect to the motor casing (32), and
the counter-load side bearing (30) supports the counter-load side rotating body (22) to be rotatable with respect to the counter-load side casing (64).

8. The actuator (10) according to claim 1,
wherein the counter-load side rotating body (22) includes a counter-load side hollow portion (72) that penetrates the counter-load side rotating body (22) in an axial direction.

9. The actuator (10) according to claim 8, further comprising:
a load side hollow portion (62) that penetrates the speed reducer (20) and the motor shaft (16) in the axial direction,
wherein a minimum inner diameter of the counter-load side hollow portion (72) is larger than a minimum inner diameter of the load side hollow portion (62).

10. An actuator unit (14) comprising:
the actuator (10) according to any one of claims 1 to 9; and
the driven member (12) that is coupled to each of the output shaft (44) and the counter-load side rotating body (22).

11. The actuator unit (14) according to claim 10,
wherein the driven member (12) includes a coupling portion (12b) that is coupled to the counter-load side rotating body (22),
the counter-load side rotating body (22) includes a counter-load side hollow portion (72) that penetrates the counter-load side rotating body (22) in an axial direction, and
the coupling portion (12b) includes a through-hole (12e) through which a wiring member (78) to be inserted into the counter-load side hollow portion (72) is able to pass.
